# EUROPÄISCHE PATENTANMELDUNG

(11) **EP 2 767 324 A1**
(43) Veröffentlichungstag der Anmeldung: **20.08.2014**
(21) Anmeldenummer: 13000762.8
(22) Anmeldetag: 14.02.2013
(51) Int. Cl.: B01D 53/14

(54) **Verfahren zum Betreiben einer physikalischen Gaswäsche mit Methanol**

(71) Anmelder: Linde Aktiengesellschaft, 80331 München (DE)
(72) Erfinder: Litzka, Stefan, 83607 Holzkirchen (DE); Tran, Anh Tuan, 86161 Augsburg (DE); Warter, Michael, 82041 Oberhaching (DE); Weiss, Horst, 81375 München (DE)

(57) **Zusammenfassung**

Die Erfindung betrifft eine physikalische Gaswäsche sowie ein Verfahren zum Betreiben einer physikalischen Gaswäsche (W), in der ein vorwiegend aus Methanol bestehendes Waschmittel eingesetzt wird, um Sauergase aus einem mit Sauergasen beladenen Einsatzgas auszuwaschen, wobei Waschmittelverluste durch die Zuführung eines weitgehend aus Methanol bestehenden Stoffgemisches (Make-up-Methanol) (16) ausgeglichen werden. Kennzeichnend für die Erfindung ist, dass eine weitgehend von schwer- und leichtsiedenden Komponenten freie Methanolfraktion mit geringer Ausbeute destillativ aus einem schwer- und leichtsiedende Komponenten enthaltenden Methanolgemisch (15) gewonnen und nachfolgend der physikalischen Gaswäsche (W) als Make-up-Methanol (16) zugeführt wird.

## Beschreibung

Die Erfindung betrifft ein Verfahren zum Betreiben einer physikalischen Gaswäsche, in der ein vorwiegend aus Methanol bestehendes Waschmittel eingesetzt wird, um Sauergase aus einem mit Sauergasen beladenen Einsatzgas auszuwaschen, wobei Waschmittelverluste durch die Zuführung eines weitgehend aus Methanol bestehenden Stoffgemisches (Make-up-Methanol) ausgeglichen werden.

Weiterhin betrifft die Erfindung eine Vorrichtung, die nach dem erfindungsgemäßen Verfahren betrieben werden kann.

Verfahren der gattungsgemäßen Art sind seit langem Stand der Technik und dem Fachmann seit vielen Jahren als Methanol-Wäschen bekannt, in denen flüssiges Methanol oder methanolhaltige Stoffgemische mit Temperaturen weit unterhalb von 0°C als Waschmittel eingesetzt werden. Sie werden insbesondere dazu verwendet, um Kohlendioxid und Schwefelkomponenten aus Syntheserohgasen abzutrennen und so ein aus Wasserstoff, Kohlenmonoxid und ggf. Kohlendioxid bestehendes Synthesegas zu erhalten, aus dem nachfolgend beispielsweise Kohlenwasserstoffe oder Alkohole synthetisiert werden. Das eingesetzte Waschmittel wird in einem Waschmittelkreislauf geführt, wobei aus dem Syntheserohgas ausgewaschene Komponenten in einer Regeneriereinrichtung aus dem beladenen Waschmittel abgetrennt werden. Unvermeidlich treten bei der Methanol-Wäsche Waschmittelverluste auf, die durch sog. Make-up-Methanol ausgeglichen werden, das mit einer vorgegebenen Mindestqualität in den Waschmittelkreislauf der Gaswäsche eingeleitet wird.

Methanol wird in industriellem Maßstab aus Wasserstoff und Kohlenmonoxid bzw. Kohlendioxid synthetisiert. Dazu wird ein schwefelfreies, Wasserstoff, Kohlenmonoxid und Kohlendioxid enthaltendes Synthesegas mit einem Druck, der typischerweise zwischen 40 und 150bar liegt, in einen Synthesekreislauf eingeleitet, in dem mit katalytischer Unterstützung ein Methanol enthaltender Stoffstrom erzeugt wird. Durch Auskondensieren des gebildeten Methanols sowie des bei der Synthese entstandenen Wassers werden unreagierte Gasbestandteile abgetrennt und zum überwiegenden Teil in den Synthesekreislauf zurückgeführt. Ein kleinerer Teil wird als Restgas ausgeschleust, um die Anreicherung im Überschuss vorhandener Edukte sowie von Substanzen wie Methan oder Stickstoff, die unter den Bedingungen der Alkoholsynthese inert sind, im Synthesekreislauf zu verhindern. Das methanolhaltige, als Rohmethanol bezeichnete Kondensat, das neben Wasser auch Nebenprodukte wie Dimetylether oder Butanol als Verunreinigungen enthält, wird meist einer destillativen Trennung unterzogen, bei der Dimethylether als leichtsiedende Komponente vom Kopf einer Leichtsiederkolonne abgezogen wird, während Butanol in den Sumpf einer Schwersiederkolonne gelangt, an deren Kopf ein Methanolprodukt (Reinmethanol) mit hoher Ausbeute und einer Reinheit von mehr als 99Gew.% gewonnen werden kann. Falls das Methanol jedoch energetisch genutzt, d. h. verbrannt werden soll, kann Rohmethanol als Produkt abgegeben werden, wodurch sich die aufwendige destillative Trennung erübrigt.

Das Reinmethanol weist i. Allg. eine Qualität auf, die seine direkte Verwendung als' Make-up-Methanol erlaubt, so dass eine zur Erzeugung des für die Methanolsynthese benötigten Synthesegases eingesetzte Methanol-Wäsche kostengünstig mit Make-up-Methanol versorgt werden kann. Anders verhält es sich dagegen, wenn lediglich Rohmethanol als Produkt hergestellt wird, das die an Make-up-Methanol gestellten Qualitätsanforderungen nicht erfüllt. Nach dem Stand der Technik wird in diesem Fall Methanol mit ausreichend hoher Qualität teuer in den Waschprozess importiert oder aus Rohmethanol in einem Verfahren, wie es zur Herstellung von Reinmethanol eingesetzt wird, durch destillative Trennung aufwendig gewonnen. Beide Varianten sind mit hohen Kosten verbunden, die die Wirtschaftlichkeit der Rohmethanolproduktion nicht unerheblich beeinträchtigen.

Aufgabe der vorliegenden Erfindung ist es daher, ein Verfahren sowie eine Vorrichtung der eingangs beschriebenen Art anzugeben, die es erlauben, Rohmethanol mit geringeren Kosten zu produzieren, als dies nach dem Stand der Technik möglich ist.

Diese Aufgabe wird verfahrensseitig erfindungsgemäß dadurch gelöst, dass eine weitgehend von schwer- und leichtsiedenden Komponenten freie Methanolfraktion mit geringer Ausbeute destillativ aus einem schwer- und leichtsiedende Komponenten enthaltenden Methanolgemisch gewonnen und nachfolgend der physikalischen Gaswäsche als Make-up-Methanol zugeführt wird.

Unter schwersiedenden Komponenten sind dabei - mit Ausnahme von Wasser - Komponenten zu verstehen, die in dem zu trennenden Methanolgemisch enthalten sind und einen höheren Siedepunkt aufweisen als Methanol, während der Siedepunkt von leichtsiedenden Komponenten niedriger ist, als derjenige von Methanol. Ein Beispiel für eine schwersiedende Komponente ist Buthanol, wogegen Dimethylether und Aceton als leichtsiedende Komponenten anzusprechen sind.

Das Verhältnis der tatsächlich in einem Prozess gewonnenen Menge eines Produkts zu der theoretisch maximal möglichen Produktmenge wird als Ausbeute bezeichnet. Handelt es sich bei dem Prozess um die destillative Trennung eines Stoffgemisches, bei dem ein Produkt mit definierter Reinheit gewonnen werden soll, so steigen sowohl die technische Komplexität und als auch die Kosten überproportionarmit der Ausbeute an, mit der das Produkt gewonnen werden soll. Das Merkmal der geringen Ausbeute, mit der die weitgehend von schwer- und leichtsiedenden Komponenten freie Methanolfraktion erfindungsgemäß gewonnen wird, erlaubt es daher, die destillative Trennung des schwer- und leichtsiedende Komponenten enthaltenden Methanolgemisches vergleichsweise einfach und kostengünstig zu gestalten. Vorzugsweise erfolgt die Gewinnung der weitgehend von schwer- und leichtsiedenden Komponenten freien Methanolfraktion mit einer Ausbeute, die zwischen 15% und 50%, bevorzugt zwischen 15% und 40% und besonders bevorzugt zwischen 15% und 30% liegt.

Zweckmäßigerweise wird die destillative Trennung des Methanolgemisches so durchgeführt, dass das Make-up-Methanol eine Reinheit aufweist, aufgrund derer es sich ohne einen weiteren Aufbereitungsschritt zum Einsatz als Waschmittel in der physikalischen Gaswäsche eignet.

Wasser und Methanol können nur mit relativ großem Aufwand destillativ getrennt werden. Wenn das zu trennende Methanolgemisch Wasser enthält, wie dies insbesondere der Fall ist, wenn es sich bei dem Methanolgemisch um Rohmethanol handelt, kann das erfindungsgemäß gewonnene Make-up-Methanol einen Wassergehalt aufweisen, der höher ist, als der zulässige Wassergehalt des in der physikalischen Gaswäsche verwendeten Waschmittels. Eine bevorzugte Ausgestaltung des erfindungsgemäßen Verfahrens sieht dann vor, dass das Wasser enthaltende Make-up-Methanol über eine bestehende Methanol/Wasser-Trenneinrichtung in die Methanol-Wäsche eingespeist wird, wo ihr Wassergehalt auf eine für den Einsatz als Waschmittel zulässige Konzentration abgesenkt wird.

Zu seiner destillativen Trennung kann das schwer- und leichtsiedende Komponenten enthaltende Methanolgemisch beispielsweise in den Mittelteil einer Rektifikationskolonne eingeleitet werden, deren Sumpf vorzugsweise mit aus dem Dampfsystem der Methanol-Wäsche bezogenem Niederdruckdampf beheizt wird. Die in der Kolonne aufsteigende Gasphase wird am Kolonnenkopf durch einen zweckmäßigerweise mit Kühlwasser betriebenen Kühler weitgehend kondensiert, wobei ein vorwiegend mit leichtsiedenden Komponenten beladenes, methanolreiches Kondensat entsteht, von dem ein Teil der Kolonne als Rücklauf aufgegeben und der restliche Teil aus der Kolonne abgezogen wird. Während aus dem Sumpf der Kolonne eine methanolreiche Fraktion entnommen werden kann, die vorwiegend mit schwersiedenden Komponenten beladen ist, wird über einen Seitenabzug das weitgehend von schwer- und leichtsiedenden Komponenten freie Make-up-Methanol erhalten.

Das erfindungsgemäße Verfahren weiterbildend wird vorgeschlagen, bei der destillativen Trennung des schwer- und leichtsiedende Komponenten enthaltenden Methanolgemisches anfallende, schwer- und/oder leichtsiedende Komponenten enthaltende, methaholreiche Fraktionen in eine Einrichtung zur Methanol-Synthese einzuleiten und auf diese Weise einer stofflichen Nutzung zuzuführen. Mit besonderem Vorteil kann diese Verfahrensvariante dann eingesetzt werden, wenn die Einrichtung zur Methanol-Synthese derjenigen Methanol-Wäsche nachgeschaltet ist, aus der das für die Methanol-Synthese benötigte Synthesegas bezogen wird.

Zweckmäßigerweise wird die destillativ aus dem schwer- und leichtsiedende Komponenten enthaltenden Methanolgemisch gewonnene, weitgehend von schwer- und leichtsiedenden Komponenten freie Methanolfraktion in einen Speicherbehälter eingeleitet und zeitversetzt wieder aus diesem entnommen.

Weiterhin betrifft die Erfindung eine Vorrichtung zur physikalischen Gaswäsche mit einem Absorber, in dem Sauergase aus einem mit Sauergasen beladenen Einsatzgas mit Hilfe eines vorwiegend aus Methanol bestehenden Waschmittels ausgewaschen werden können, einem mit dem Absorber zu einem Waschmittelkreislauf verbundenen Regenerierteil zum Regenerieren von im Absorber mit ausgewaschenen Stoffen beladenem Waschmittel sowie einer Zuführeinrichtung, über die dem Waschmittelkreislauf Make-up-Methanol zum Ausgleich von Waschmittelverlusten zugeführt werden kann.

Die gestellte Aufgabe wird vorrichtungsseitig erfindungsgemäß dadurch gelöst, dass die Vorrichtung eine Trenneinrichtung umfasst, in der aus einem schwer- und leichtsiedende Komponenten enthaltenden Methanolgemisch mit geringer Ausbeute destillativ eine weitgehend von schwer- und leichtsiedenden Komponenten freie, methanolreiche Fraktion abgetrennt werden kann, wobei die Trenneinrichtung so mit dem Waschmittelkreislauf verbunden ist, dass die weitgehend von schwer- und leichtsiedenden Komponenten freie, methanolreiche Fraktion als Make-up-Methanol in den Waschmittelkreislauf der Methanol-Wäsche einleitbar ist.

Die Trenneinrichtung ist vorzugsweise mit dem Regenerierteil der Methanol-Wäsche strömungstechnisch verbunden, so dass das Make-up-Methanol direkt über den Regenerierteil oder stromaufwärts von diesem und stromabwärts des Absorbers in den Waschmittelkreislauf eingeleitet werden kann. Hierdurch ist es möglich, den Regenerierteil zu nutzen, um solche Substanzen aus Make-up-Methanol abzutrennen, die in dem im Absorber eingesetzten Waschmittel unerwünscht sind. Gewöhnlich umfasst der Regenerierteil einer Methanol-Wäsche eine Wasser/Methanol-Trenneinrichtung, in der Wasser aus zu regenerierendem Waschmittel abgetrennt werden kann. Vorzugsweise ist die Methanol-Trenneinrichtung mit der im Regenerierteil der Methanol-Wäsche angeordneten Wasser/Methanol-Trenneinrichtung derart verbunden, dass das Make-up-Methanol in die Wasser/Methanol-Trenneinrichtung eingeleitet werden kann. Durch diese Anordnung ist es möglich, im Absorber nicht erwünschtes Wasser aus dem Make-up-Methanol mit geringem Aufwand zu entfernen.

Eine bevorzugte Variante der erfindungsgemäßen Vorrichtung sieht vor, dass die Methanol-Trenneinrichtung als Rektifikationskolonne mit einem Aufkocher zum Aufkochen der Sumpffraktion und einem Kopfkondensator zum Kondensieren der zum Kopf der Trennsäule aufsteigenden Gasfraktion ausgeführt ist. Im Mittelteil der Rektifikationskolonne ist eine Zuführeinrichtung für das zu trennende schwer- und leichtsiedende Komponenten enthaltende Methanolgemisch angeordnet, während sie in ihrem oberen Bereich einen Seitenabzug zum Abzug der von schwer- und leichtsiedenden Komponenten freien methanolreichen Fraktion aufweist. Die Kolonne ist so ausgeführt, dass ihr ein Teil des im Kopfkondensator erzeugbaren Kondensats als Rücklauf aufgegeben und ein anderer Teil, bei dem es sich um eine vorwiegend leichtsiedende Komponenten enthaltende, methanolreiche Fraktion handelt, entnommen werden kann. Zum Abzug der vorwiegend schwersiedende Komponenten enthaltenden, methanolreichen Sumpffraktion ist der Sumpfraum mit einer Abzugseinrichtung versehen.

Vorzugsweise ist die Methanol-Trenneinrichtung derart mit einer Einrichtung zur Methanolsynthese verbunden, dass Rohmethanol aus dieser in die Methanol-Trenneinrichtung eingeleitet und schwer- bzw. leichtsiedende Komponenten enthaltende, methanolreiche Fraktionen als Einsätze in diese zurückgeführt werden können.

Zweckmäßigerweise umfasst die erfindungsgemäße Vorrichtung einen Speicherbehälter, in den eine in der Methanol-Trenneinrichtung gewonnene, weitgehend von schwer- und leichtsiedenden Komponenten freie Methanolfraktion eingeleitet und zeitversetzt wieder entnommen werden kann.

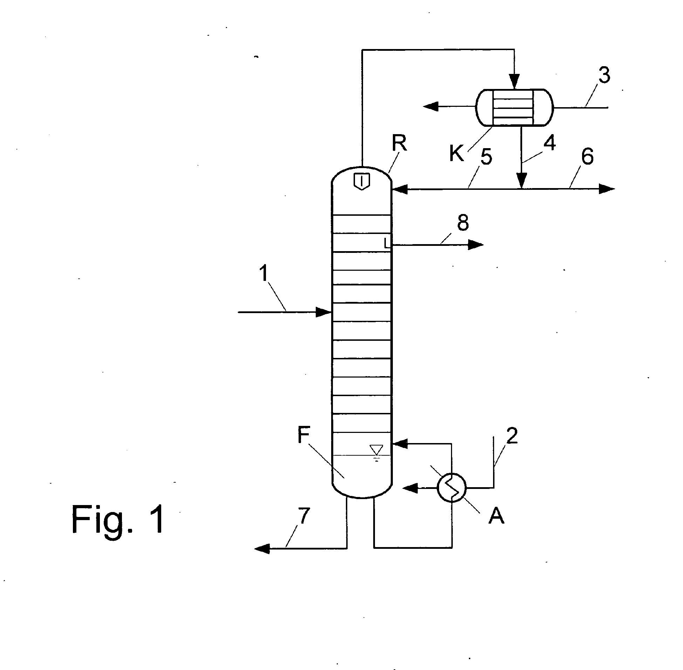

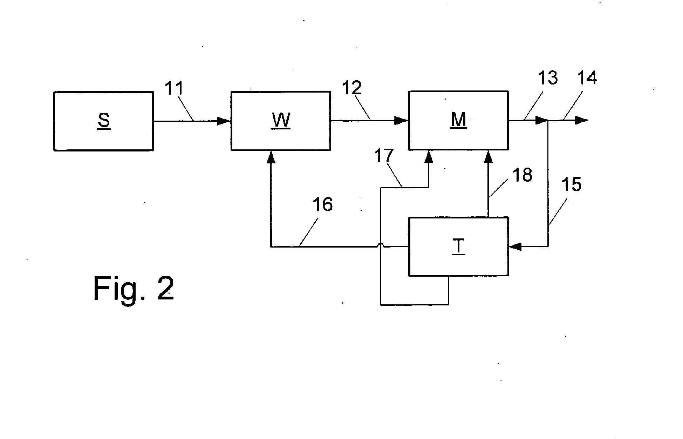

Im Folgenden soll die Erfindung anhand zweiter in den Figuren 1 und 2 schematisch dargestellter Ausführungsbeispiele näher erläutert werden.

Die Figur 1 zeigt die Gewinnung von Make-up-Methanol für eine Methanol-Wäsche durch destillative Trennung eines schwer- und leichtsiedene Komponenten enthaltenden Methanolgemisches.

Die Figur 2 zeigt eine Anordnung zur Produktion von Methanol, in der Make-up-Methanol für die Methanolwäsche nach dem erfindungsgemäßen Verfahren gewonnen wird.

In Figur 1 wird über Leitung 1 ein schwer- und leichtsiedende Komponenten enthaltendes Methanolgemisch, bei dem es sich beispielsweise um Rohmethanol aus einer Methanolsynthese handelt, flüssig in den Mittelteil einer Rektifikationskolonne R eingeleitet, wo über Stoffaustauschböden nach unten geführt und dabei in intensiven Kontakt mit einer im Gegenstrom geführten Gasphase gebracht wird. Die Sumpffraktion F wird vorzugsweise über einen Aufkocher A mit aus dem Dampfsystem der Methanol-Wäsche (nicht dargestellt) bezogenem Niederdruckdampf 2 beheizt, wobei Dampf entsteht, der als Gasphase in der Kolonne R nach oben strömt und dabei in intensiven Kontakt mit der nach unten strömenden Flüssigphase gebracht wird. Die in der Kolonne aufsteigende Gasphase wird am Kolonnenkopf durch einen zweckmäßigerweise mit Kühlwasser 3 betriebenen Kühler K weitgehend kondensiert, wobei ein vorwiegend mit leichtsiedenden Komponenten beladenes, methanolreiches Kondensat 4 entsteht, von dem ein Teil 5 der Kolonne als Rücklauf aufgegeben und der restliche Teil 6 aus der Kolonne abgezogen wird. Während aus dem Sumpf der Kolonne eine methanolreiche Fraktion 7 abgezogen werden kann, die vorwiegend mit schwersiedenden Komponenten beladen ist, wird über einen Seitenabzug das die weitgehend von schwer- und leichtsiedenden Komponenten freier Strom 8 erhalten, der als Make-up-Methanol einer Methanolwäsche (nicht dargestellt) zugeführt wird.

Im Synthesegaserzeuger S der Figur 2 wird aus einem kohlenstoffhaltigen Einsatz beispielsweise durch Dampfreformierung ein Wasserstoff, Kohlenmonoxid sowie Kohlendioxid enthaltendes Syntheserohgas 11 gewonnen, das in die Methanol-Wäsche W geführt wird. Hier werden mit Hilfe eines vorwiegend aus Methanol bestehenden Waschmittels Schwefelkomponenten und Kohlendioxid aus dem Syntheserohgas abgetrennt, um ein Synthesegas 12 zu erhalten, das nachfolgend als Einsatz in die Methanolsynthese M geleitet wird, wo mit katalytischer Unterstützung ein vorwiegend aus Methanol bestehendes, jedoch auch schwer- und leichtsiedende Komponenten sowie Wasser enthaltendes Rohmethanol 13 erzeugt wird. Aufgrund seiner geringen Qualität eignet sich das Rohmethanol 13 insbesondere nicht zum direkten Einsatz als Waschmittel in der Methanol-Wäsche W, jedoch kann es beispielsweise zur energetischen Nutzung als Methanolprodukt 14 exportiert werden. Die Teilmenge 15 des Rohmethanolstroms 13 wird in die Methanol-Trenneinrichtung T geleitet, die vorzugsweise entsprechend der im ersten Ausführungsbeispiel beschriebenen Einrichtung ausgeführt ist, wo mit geringer Ausbeute eine weitgehend von schwer- und leichtsiedenden Komponenten freie Methanolfraktion 16 sowie eine vorwiegend mit schwersiedenen 17 und eine vorwiegend mit leichtsiedenden Komponenten beladene, methanolreiche Fraktion 18 destillativ abgetrennt werden. Während die weitgehend von schwer- und leichtsiedenden Komponenten freie Fraktion 16 als Make-up-Methanol in die Methanol-Wäsche W eingeleitet wird, werden die mit schwer- bzw. leichtsiedenden Komponenten beladenen Fraktionen 17 und 18 als Einsätze in die Methanolsynthese M zurückgeführt.

## Patentansprüche

1. Verfahren zum Betreiben einer physikalischen Gaswäsche, in der ein vorwiegend aus Methanol bestehendes Waschmittel eingesetzt wird, um Sauergase aus einem mit Sauergasen beladenen Einsatzgas auszuwaschen, wobei Waschmittelverluste durch die Zuführung eines weitgehend aus Methanol bestehenden Stoffgemisches (Make-up-Methanol) ausgeglichen werden, **dadurch gekennzeichnet, dass** eine weitgehend von schwer- und leichtsiedenden Komponenten freie Methanolfraktion mit geringer Ausbeute destillativ aus einem schwer- und leichtsiedende Komponenten enthaltenden Methanolgemisch gewonnen und nachfolgend der physikalischen Gaswäsche als Make-up-Methanol zugeführt wird.

2. Verfahren nach Anspruch 1, **dadurch gekennzeichnet, dass** die weitgehend von schwer- und leichtsiedenden Komponenten freie Methanolfraktion mit einer Ausbeute gewonnen wird, die zwischen 15% und 50%, bevorzugt zwischen 15% und 40% und besonders bevorzugt zwischen 15% und 30% liegt.

3. Verfahren nach einem der Ansprüche 1 oder 2, **dadurch gekennzeichnet, dass** Make-up-Methänol über eine bestehende Methanol/Wasser-Trenneinrichtung in die physikalische Gaswäsche eingespeist wird.

4. Verfahren nach einem der Ansprüche 1 bis 3, **dadurch gekennzeichnet, dass** bei der destillativen Trennung des schwer- und leichtsiedende Komponenten enthaltenden Methanolgemisches anfallende, schwer- und/oder leichtsiedende Komponenten enthaltende, methanolreiche Fraktionen in eine Einrichtung zur Methanol-Synthese eingeleitet werden.

5. Verfahren nach einem der Ansprüche 1 bis 4, **dadurch gekennzeichnet, dass** es sich bei dem schwer- und leichtsiedende Komponenten enthaltenden Methanolgemisch um Rohmethanol aus einer Methanolsynthese handelt.

6. Verfahren nach einem der Ansprüche 1 bis 5, **dadurch gekennzeichnet, dass** die destillative Trennung des schwer- und leichtsiedende Komponenten enthaltenden Methanolgemisch in einer Rektifikationskolonne durchgeführt wird, in deren Mittelteil das Methanolgemisch eingeleitet und aus der über einen Seitenabzug die weitgehend von schwer- und leichtsiedenden Komponenten freie Methanolfraktion abgezogen wird.

7. Vorrichtung zur physikalischen Gaswäsche mit einem Absorber, in dem Sauergase aus einem mit Sauergasen beladenen Einsatzgas mit Hilfe eines vorwiegend aus Methanol bestehenden Waschmittels ausgewaschen werden können, einem mit dem Absorber zu einem Waschmittelkreislauf verbundenen Regenerierteil zum Regenerieren von im Absorber mit ausgewaschenen Stoffen beladenem Waschmittel sowie einer Zuführeinrichtung, über die dem Waschmittelkreislauf Make-up-Methänol zum Ausgleich von Waschmittelverlusten zugeführt werden kann, **dadurch gekennzeichnet, dass** sie eine Trenneinrichtung umfasst, in der aus einem schwer- und leichtsiedende Komponenten enthaltenden Methanolgemisch mit geringer Ausbeute destillativ eine weitgehend von schwer- und leichtsiedenden Komponenten freie, methanolreiche Fraktion abgetrennt werden kann, wobei die Trenneinrichtung so mit dem Waschmittelkreislauf verbunden ist, dass die weitgehend von schwer- und leichtsiedenden Komponenten freie, methanolreiche Fraktion als Make-up-Methanol in den Waschmittelkreislauf der Methanol-Wäsche einleitbar ist.

8. Vorrichtung nach Anspruch 7, **dadurch gekennzeichnet, dass** die Methanol-Trenneinrichtung mit einer im Regenerierteil der Methanol-Wäsche angeordneten Wasser/Methanol-Trenneinrichtung derart verbunden, dass das Make-up-Methanol in die Wasser/Methanol-Trenneinrichtung eingeleitet werden kann.

9. Vorrichtung nach einem der Ansprüche 7 oder 8, **dadurch gekennzeichnet, dass** die Methanol-Trenneinrichtung als Rektifikationskolonne mit einem Aufkocher zum Aufkochen der Sumpffraktion und einem Kopfkondensator zum Kondensieren der zum Kopf der Trennsäule aufsteigenden Gasfraktion ausgeführt ist.

10. Vorrichtung nach einem der Ansprüche 7 bis 9, **dadurch gekennzeichnet, dass** die Methanol-Trenneinrichtung derart mit einer Einrichtung zur Methanolsynthese verbunden ist, dass Rohmethanol aus dieser in die Methanol-Trenneinrichtung eingeleitet und schwer- bzw. leichtsiedende Komponenten enthaltende, methanolreiche Fraktionen als Einsätze in diese zurückgeführt werden können.
